# EUROPÄISCHE PATENTSCHRIFT

(11) **EP 2 264 368 B1**
(45) Veröffentlichungstag und Bekanntmachung des Hinweises auf die Patenterteilung: **27.03.2019**
(21) Anmeldenummer: 10005439.4
(22) Anmeldetag: 26.05.2010
(51) Int. Cl.: F23G 7/14, F23G 5/027, F23G 5/16, F23G 5/00, F23J 15/00, F23G 5/20, F23G 5/46

(54) **Verfahren zur Aufbereitung von Straßen-aufbruchmaterial**
Method for processing roadway rubble
Procédé de préparation de matériaux fragmentés pour routes

(30) Priorität: 18.06.2009 DE 102009025361
(43) Veröffentlichungstag der Anmeldung: 22.12.2010
(73) Patentinhaber: Eisenmann SE, 71032 Böblingen (DE)
(72) Erfinder: Neumann, Uwe, 71034 Böblingen (DE); Jeske, Jörg, 29646 Bispingen (DE)
(74) Vertreter: Ostertag & Partner Patentanwälte mbB

(56) Entgegenhaltungen:
- EP-A1- 1 378 494
- EP-A2- 2 071 080
- DE-C1- 3 836 899
- US-A- 4 208 131
- US-A- 4 387 996

## Beschreibung

Die Erfindung betrifft ein Verfahren zur Aufbereitung von Straßenaufbruchmaterial, das im Wesentlichen aus Splitt und pechhaltigem organischem Bindemittel besteht, bei dem
a) das Straßenaufbruchmaterial zerkleinert wird;
b) das zerkleinerte Straßenaufbruchmaterial bis zu einer Reaktionstemperatur erwärmt wird, bei welcher das Bindemittel in ein Gas umgewandelt wird;
c) das entstehende Gas gereinigt und dann an die Umgebung abgegeben wird;
d) der von Bindemittel befreite Splitt der Wiederverwertung in einem Asphaltmischwerk zugeführt wird.

Ältere Straßen wurden häufig unter Verwendung eines Straßenbelags hergestellt, bei dem als Bindemittel Pech (Steinkohleteer) eingesetzt wurde. Da Pech einen hohen Anteil an PAK'S (Leitsubstanz: Benzo(a)pyren) enthält, die umweltschädlich sind, ist der Einsatz von derartigem pechhaltigem Straßenaufbruchmaterialien heute nicht mehr erlaubt. Daher scheidet auch die unmittelbare Wiederverwendung von nur mechanisch aufbereitetem, pechhaltigem Straßenaufbruchmaterial in einem Asphaltmischwerk aus. Vielmehr muss der in dem Straßenaufbruchmaterial enthaltene Splitt von dem pechhaltigem Bindemittel befreit werden, bevor er dann zur Herstellung von frischem Asphalt verwendet werden kann.

Eine Vorrichtung und eine Anlage der eingangs genannten Art sind aus der EP 1 785 202 A1 bekannt. Hier werden die flüchtigen Bestandteile des Bindemittels durch bloßes Erhitzen ausgetrieben; die entstehenden Gase werden nach dem Verlassen des Reaktionsbehälters zum Teil auskondensiert und zum Teil verbrannt. Damit dies so geschehen kann, ist innerhalb des Reaktionsbehälters eine sauerstoffarme Atmosphäre erforderlich, so dass man diesen Vorgang als Pyrolyse bezeichnen kann. Eine solche Verfahrensweise setzt einen verhältnismäßig hohen organischen Anteil im Straßenaufbruchmaterial voraus, also einen verhältnismäßig hohen Heizwert, den der normale Straßenaufbruch nicht besitzt. Nachteilig bei dem bekannten Verfahren ist außerdem, dass bei der Pyrolyse Pyrolysekoks zurückbleibt, also organisches Material, welches möglicherweise selbst noch giftig ist, jedenfalls aber nicht gerne akzeptiert wird.

Vom Markt her ist ein Verfahren zur Aufbereitung von Straßenaufbruchmaterial bekannt, bei dem ein Verbrennungsprozess durchgeführt wird, der aber bei einer Temperatur zwischen 800 Grad Celsius und 900 Grad Celsius abläuft. Dies ist eine Temperatur, bei welcher eine Beeinträchtigung der mechanischen Eigenschaften der Zuschlagstoffe, insbesondere also des Splitts, eintritt. Die Verbrennung erfolgt bei dem vorbenutzten Verfahren mit Hilfe eines Gasbrenners; eine Vorerwärmung von Verbrennungsluft unter Nutzung der thermischen Energie der Verbrennungsgase ist nicht vorgesehen. Es handelt sich um eine Stand-Alone-Anlage, von welcher der gereinigte Splitt durch Lastkraftwagen zum Asphaltmischwerk transportiert werden muss.

Bei beiden bekannten Verfahren werden verhältnismäßig hohe Reaktionstemperaturen eingesetzt. Hieraus ergibt sich die Notwendigkeit einer katalytischen Entstickung. Aufgabe der vorliegenden Erfindung ist es, ein Verfahren der eingangs genannten Art so auszugestalten, dass sie in der Durchführung bzw. in der Herstellung und im Betrieb kostengünstiger sind.

Diese Aufgabe wird dadurch gelöst, dass
e) das Straßenaufbruchmaterial im Schritt b) unter Zufuhr von Oxidationsluft bei einer Temperatur verbrannt wird, die 600° C nicht übersteigt.

Erfindungsgemäß wurde erkannt, dass der in der EP 1 785 202 A1 beschriebenen Pyrolyseprozess zur Umwandlung des Bindemittels in Gasform einem Verbrennungsprozess nicht nur energetisch unterlegen ist. Feste Rückstände, die an dem Splitt zurückbleiben, entstehen bei der Verbrennung trotz der verhältnismäßig niedrigen, erfindungsgemäß eingesetzten Temperaturen nicht; der gereinigte Splitt hat ein hellgraues, sauberes Aussehen. Gegenüber dem vorbenutzten Verfahren wurde erkannt, dass sehr viel niedrigere Temperaturen, als dort eingesetzt wurden, genügen. Dies hat den Hauptvorteil, dass die mechanische Qualität des gereinigten Splitts durch den Aufbereitungsvorgang nicht beeinträchtigt wird; es hat sich herausgestellt, dass die mechanischen Eigenschaften des gereinigten Splitts denen von frischem Splitt im Wesentlichen nicht nachstehen. Die niedrigeren Temperaturen, die erfindungsgemäß eingesetzt werden, stellen darüber hinaus geringere Anforderungen an die mechanischen Komponenten der Anlage, und machen im Allgemeinen eine Entstickung der Rauchgase entbehrlich.

Um sicherzustellen, dass von den bei der ersten Verbrennung des Bindemittels entstehenden Rauchgase keine organischen Substanzen in die Umgebung ausgetragen werden, sollten die Rauchgase bevorzugt unter erneuter Zufuhr von Oxidationsluft nachverbrannt werden.

Aus energetischen Gründen ist es günstig, wenn die bei der ersten Verbrennung und/oder bei der Nachverbrennung verwendete Oxidationsluft durch die bei der Verbrennung des Bindemittels entstehende Rauchgase vorerwärmt wird. Auf diese Weise ist es in vielen Fällen möglich, das erfindungsgemäße Verfahren autotherm also praktisch ohne Zufuhr von Fremdenergie, zu fahren.

Aus regelungstechnischen Gründen ist es zweckmäßig, wenn die bei der Nachverbrennung verwendete Oxidationsluft auf maximal 300 Grad Celsius vorgewärmt wird.

Es ist empfehlenswert, dass bei der Reinigung der Rauchgase eine Entstaubung stattfindet und/oder ein Sorptionsverfahren eingesetzt wird.

Als Sorbens bei dem Sorptionsverfahren kommen insbesondere Weißkalkhydrat oder Natriumhydrogenkarbonat in Frage. Die Auswahl des Sorptionsmittels bzw. der Sorptionsmittel sowie die Ausführung und die Anzahl der Filterstufen ergibt sich aus den Schadstoffkonzentrationen und den Schadstoffzusammensetzungen im Bindemittel.

Bei einem hohen Anteil an Bindemittel(n) im Straßenaufbruchmaterial wird bei der Verbrennung mehr Wärme erzeugt, als es zur Aufrechterhaltung einer autothermen Verfahrensführung benötigt wird. In diesem Falle ist es besonders zweckmäßig, einen Teil der bei der Verbrennung des Bindemittels entstehenden Wärmeenergie zur Erzeugung von elektrischer Energie zu verwenden. Infrage kommt insbesondere ein ORC-Prozess, der bei den zur Verfügung stehenden Temperaturen einen besonders günstigen Wirkungsgrad besitzt.

Ebenfalls aus Energiespargründen empfiehlt es sich, den von Bindemittel gereinigten Splitt in noch erwärmtem Zustand direkt an das Asphaltmischwerk zu übergeben. Unter "direkt übergeben" wird verstanden, dass eine Umladung auf ein fahrbares Transportmittel, insbesondere einen Lastkraftwagen, nicht erforderlich ist.

Ausführungsbeispiele der Erfindung werden nachfolgend anhand der Zeichnung näher erläutert; es zeigen
- Figur 1: schematisch eine Anlage zur thermischen Behandlung von pechhaltigem Straßenaufbruchmaterial;
- Figur 2: eine Abwandlung der Anlage von Figur 1.

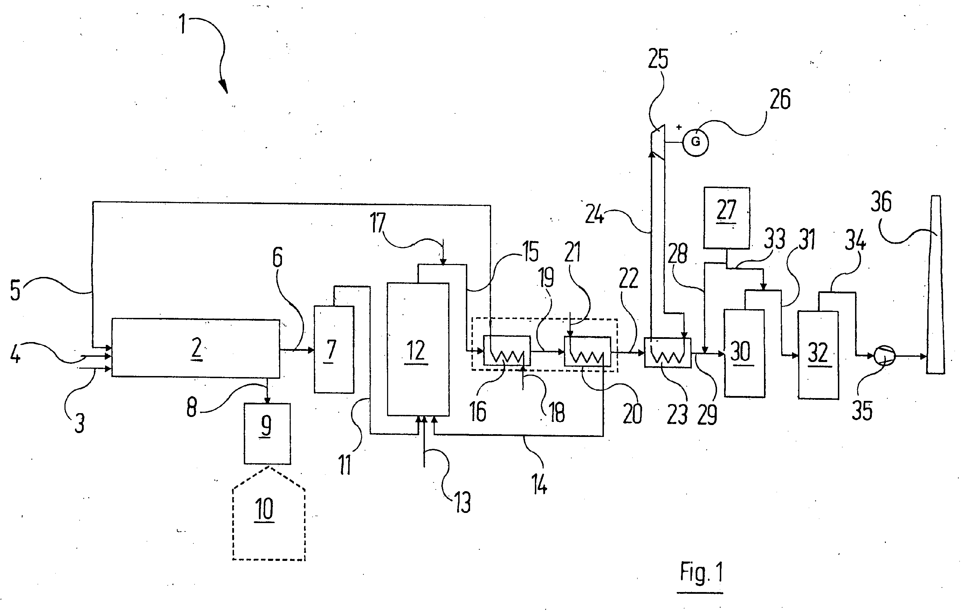

Die in Figur 1 dargestellte und insgesamt mit dem Bezugszeichen 1 versehene Anlage zur thermischen Behandlung von pechhaltigem Straßenaufbruchmaterial umfasst als "Herzstück" einen Drehrohrofen 2. Dieser ist als Vollstahldrehrohr mit innenliegender Beschaufelung und außenliegender Wärmedämmung ausgeführt. Über eine Leitung 3 wird dem Drehrohrofen 2 das Edukt, das ausreichend zerkleinerte pechhaltige Straßenaufbruchmaterial, zugeführt. Über eine zweite Leitung 4 gelangt Zusatzbrennstoff zu einem nicht eigens dargestellten Teil des Drehrohrofens 2 bildenden Brenner, der den Inhalt des Drehrohrofens 2 auf eine Temperatur von maximal 600° C aufheizt. Über eine Leitung 5 schließlich wird die zur Verbrennung der organischen eingesetzten Bindemittel, insbesondere des Pechs (Steinkohleteer) erforderliche Oxidationsluft in den Drehrohrofen 2 eingebracht, die zuvor in weiter unten beschriebener Weise vorerwärmt wurde.

Durch eine ausreichend lange Verweilzeit des Edukts sowie einen geeigneten Luftüberschuss innerhalb des Drehrohrofens 2 wird sichergestellt, dass das organische Bindemittel sicher thermisch zerstört wird. Bei geeigneter Vorerwärmung der Oxidationsluft und bei einem durchschnittlichen Bindemittelgehalt im Aufbruchmaterial arbeitet der Drehrohrofen 2 autotherm, benötigt also im Wesentlichen keine zusätzliche Energiezufuhr über die Leitung 4.

Die bei der Verbrennung des organischen Bindemittels entstehenden Rauchgase werden dem Drehrohrofen 2 entnommen und über die Leitung 6 einem Zyklon 7 zugeleitet, wo sie vorentstaubt werden. Der im Drehrohrofen 2 bei dem Verbrennungsprozess zurückbleibende, von organischem Bindemittel befreite Splitt, dessen Gewichtsanteil mehr als 90 Prozent des Aufgabematerials beträgt, wird dem Drehrohrofen 2 über eine Leitung 8 entnommen und mit einer Austrittstemperatur von annähernd 600° C einem Silo 9 zugeführt. Der Silo 9 ist thermisch isoliert und in unmittelbarer Nähe zu dem schematisch mit dem Bezugszeichen 10 versehenen Asphaltmischwerk angeordnet, so dass der Splitt auf dem Weg zwischen dem Silo 9 und dem Asphaltmischwerk 10 praktisch keine nennenswerte Abkühlung erfährt. Gegebenenfalls kann der heisse Splitt zur Einstellung der richtigen Verarbeitungstemperatur und/oder anderer gewünschter Eigenschaften mit frischem Splitt vermischt werden. Auf diese Weise wird ein wesentlicher Beitrag zur Minderung des Verbrauchs an fossilen Energieträgern und damit auch den daraus resultierenden CO₂-Emissionen geleistet.

Die vorentstaubten Rauchgase strömen aus dem Zyklon 7 über eine Leitung 11 in eine Nachbrennkammer 12, wo sie nachverbrannt werden, wie dies in verschiedenen Ländern öffentlich-rechtlich vorgeschrieben ist. Über eine Leitung 13 wird dem Brenner der Nachbrennkammer 12, der nicht eigens dargestellt ist, Zusatzbrennstoff zugeführt. Eine weitere Leitung 14 dient dem Einbringen von Oxidationsluft, die ebenfalls in weiter unten erläuterter Weise vorerwärmt wird.

Die aus der Nachbrennkammer 12 austretenden Rauchgase gelangen über eine Leitung 15 zu einem ersten Wärmetauscher 16. Um zu vermeiden, dass die Rauchgase in den ersten Wärmetauscher 16 mit zu hoher Temperatur eintreten, was dessen Lebensdauer beeinträchtigen könnte, wird gegebenenfalls über eine in die Leitung 15 mündende weitere Leitung 17 Frischluft so zudosiert, dass die Temperatur der dem Wärmetauscher 16 zugeführten Rauchgase 750° C nicht übersteigt.

Die so gegebenenfalls in ihrer Temperatur reduzierten Rauchgase stehen in dem Wärmetauscher 16 in Wärmeaustausch mit Umgebungsluft, die dem Wärmetauscher 16 über eine Leitung 18 zugeführt wird. Diese Luft gelangt nach dem Durchströmen des Wärmetauschers 16 in die oben schon erwähnte Leitung 5 und bildet damit die vorerwärmte Oxidationsluft für den Drehrohrofen 2.

Das im ersten Wärmetauscher 16 abgekühlte Rauchgas wird über eine Leitung 19 einem zweiten Wärmetauscher 20 zugeführt. In diesem Wärmetauscher 20 stehen die Rauchgase in Wärmetausch mit Umgebungsluft, die über eine Leitung 21 zugeführt und über die oben schon erwähnte Leitung 14 der Nachbrennkammer 12 als vorerwärmte Oxidationsluft zugeleitet wird. Aus regeltechnischen Gründen sollte die die Leitung 14 durchströmende Oxidationsluft eine Temperatur von 300° C nicht überschreiten.

Die Rauchgase haben auch nach dem Verlassen des zweiten Wärmetauschers 21 noch einen erheblichen thermischen Energiegehalt. Sie werden daher über eine Leitung 22 einem dritten Wärmetauscher 23 zugeführt. Sie stehen dort in Wärmetausch mit einem schematisch dargestellten Thermofluid-Kreislauf 24, mit dem eine Entspannungsturbine 25 angetrieben wird, die ihrerseits einen Generator 26 antreibt. Der von diesem Generator 26 erzeugte Strom steht zur freien Verfügung.

Die Rauchgase, welche den dritten Wärmetauscher 23 verlassen, befinden sich noch auf einer Temperatur von ca. 160° C. Es schließt sich zur abschließenden Reinigung der Rauchgase ein trockenes Sorptionsverfahren an. Hierzu ist in einem Silo 27 ein geeignetes Sorbens, im dargestellten Ausführungsbeispiel der Figur 1 Weißkalkhydrat, untergebracht. Dieses Sorbenz wird über eine Leitung 28 in die eine Leitung 29 durchströmenden Rauchgase eindosiert. Diese, Sorbensien mit sich führenden Rauchgase 29 werden durch ein erstes Filter 30 und über eine weitere Leitung 31 zu einem zweiten Filter 32 geschickt. Über eine Leitung 33 wird dem die Leitung 31 durchströmenden Rauchgas entweder ebenfalls aus dem Silo 27 oder aus einem anderen, nicht dargestellten Silo Sorbens zudosiert.

Die das zweite Filter 32 verlassenden, nunmehr ausreichend gereinigten Rauchgase gelangen über eine Leitung 34 und ein Gebläse 35 zu einem Kamin 36 und werden von diesem in die Atmosphäre abgegeben.

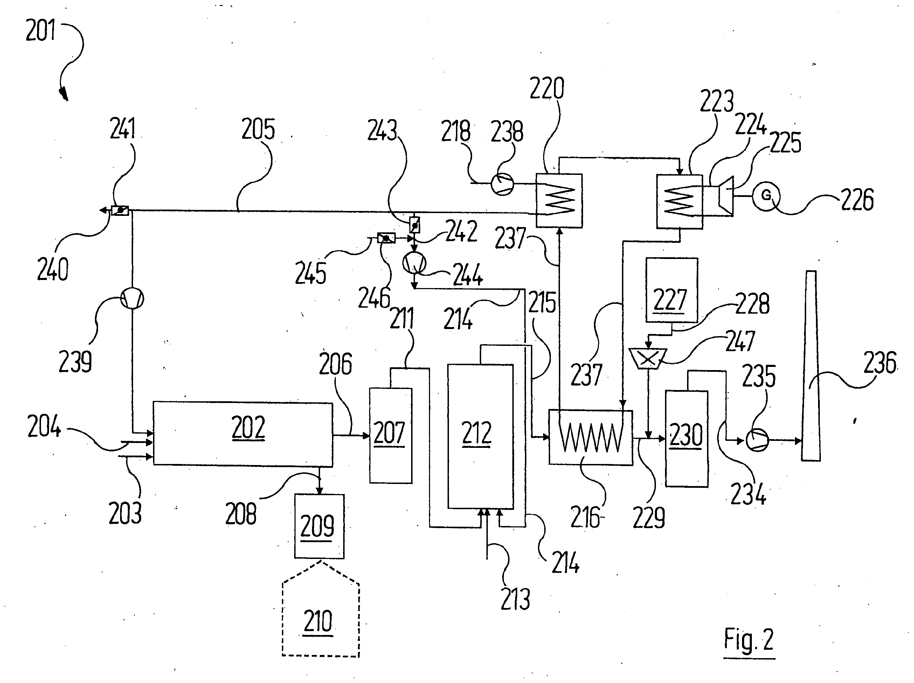

Die in Figur 2 dargestellte Variante einer Anlage zur thermischen Entsorgung von pechhaltigem Straßenaufbruchmaterial unterscheidet sich von der Anlage nach Figur 1, die oben beschrieben wurde, im Wesentlichen nur in denjenigen Bereichen, die der Verwertung des Wärmegehaltes der entstehenden Rauchgase dienen. In Figur 2 sind Elemente, die solchen der Figur 1 entsprechen, mit demselben Bezugszeichen zuzüglich 200 gekennzeichnet.

Der Drehrohrofen 202, in welchem die eigentliche Verbrennung der organischen Bestandteile des Aufbruchmaterials stattfindet, der Silo 209 zur Aufbewahrung des heißen, gereinigten Splitts, das in der Nähe dieses Silos 209 angeordnete Asphaltmischwerk 210, der Zyklon 207, in welchem die aus dem Drehrohrofen 202 austretenden Rauchgase entstaubt werden, sowie die Nachbrennkammer 212 haben im Ausführungsbeispiel der Figur 2 exakt dieselbe Funktion wie beim Ausführungsbeispiel der Figur 1, so dass auf eine nähere Beschreibung verzichtet werden kann.

Ähnlich wie beim Ausführungsbeispiel der Figur 1 werden die die Nachbrennkammer 212 verlassenden Rauchgase einem ersten Wärmetauscher 216 zugeführt. In diesem Wärmetauscher 216 stehen die Rauchgase in Wärmetausch mit einem Thermofluid-Kreislauf 237, der über einen zweiten Wärmetauscher 220 und einem dritten Wärmetauscher 223 führt.

In dem Wärmetauscher 220 wird Umgebungsluft, die von einem in der Leitung 218 liegenden Gebläse 238 angesaugt wird, vorerwärmt und über die Leitung 205, in der ein weiteres Gebläse 239 angeordnet ist, als vorerwärmte Oxidationsluft in den Drehrohrofen 202 eingebracht. In einer von der Leitung 205 abzweigenden Leitung 240 liegt eine motorisch gesteuerte Klappe 241, die geöffnet werden kann, wenn dem Thermofluid-Kreislauf 237 nicht auf andere Weise ausreichend Wärme abgenommen werden kann, also eine Wärmeüberproduktion vorliegt.

Von der Leitung 205 zweigt außerdem eine Leitung 242 ab, in welcher in Serie eine motorisch steuerbare Klappe 243 und ein Gebläse 244 liegen. Über eine weitere Leitung 245, deren Durchfluss von einer motorisch steuerbaren Klappe 246 beherrscht wird, kann zwischen der Klappe 243 und dem Gebläse 244 in die Leitung 242 Umgebungsluft bei Bedarf eingebracht werden. Von dem Gebläse 244 führt die Leitung 214 zu dem Oxidationsluft-Einlass der Nachbrennkammer 212.

Beim Ausführungsbeispiel der Figur 2 wird also die vorerwärmte Oxidationsluft für die Nachbrennkammer 212 demselben Wärmetauscher 220 entnommen, der auch die vorerwärmte Oxidationsluft des Drehrohrofens 202 erzeugt. Beim Ausführungsbeispiel der Figur 1 wurden zur Vorerwärmung der Oxidationsluft des Drehrohrofens 2 und der Oxidationsluft der Nachbrennkammer 12 zwei in Serie liegende Wärmetauscher 16 und 20 eingesetzt. Um gleichwohl die Menge und die Temperatur der Oxidationsluft, die für die Nachbrennkammer 212 bestimmt ist, unabhängig von Wärme und Temperatur der Oxidationsluft, welche in den Drehrohrofen 202 gelangen soll, einstellen zu können, sind die Klappen 243 und 246 vorgesehen. Die Stellung der Klappe 243 bestimmt im Wesentlichen die Menge, während durch die Stellung der Klappe 246 die richtige Abkühlung der über die Leitung 214 zur Nachbrennkammer 212 fließenden Oxidationsluft erreicht werden kann.

Der dritte Wärmetauscher 223, der ebenso wie der Wärmetauscher 220 in dem Thermofluid-Kreislauf 237 liegt, steht in Wärmetausch mit einem weiteren Thermofluid-Kreislauf 224, mit dem in derselben Weise wie durch den Thermofluid-Kreislauf 24 der Figur 1 eine Entspannungsturbine 225 und über diese ein stromerzeugender Generator 226 angetrieben werden kann.

Die den Wärmetauscher 216 über die Leitung 229 verlassenden Rauchgase erhalten über eine Leitung 228, in der ein Dossiergerät 247 liegt, aus einem Silo 227 Sorbens zudosiert. Bei diesem Ausführungsbeispiel wird als Sorbens Natriumhydrogenkarbonat eingesetzt, das eine höhere Abscheiderate als das beim Ausführungsbeispiel der Figur 1 eingesetzte Weißkalkhydrat besitzt. Es genügt in diesem Falle ein einziges Filter 230, um ausreichend gereinigtes Rauchgas herzustellen, das dann über die Leitung 234 und das Gebläse 235 sowie den Kamin 236 in die Atmosphäre abgegeben werden kann.

Beim Ausführungsbeispiel der Figur 2 wird also das die Nachbrennkammer 212 verlassende Rauchgas in einem einzigen Schritt auf die Filterbetriebstemperatur von ca. 200° C abgekühlt.

## Patentansprüche

1. Verfahren zur Aufbereitung von Straßenaufbruchmaterial,
das im Wesentlichen aus Splitt und pechhaltigem organischem Bindemittel besteht, bei dem
a) das Straßenaufbruchmaterial zerkleinert wird;
b) das zerkleinerte Straßenaufbruchmaterial bis zu einer Reaktionstemperatur erhitzt wird, bei welcher das Bindemittel in ein Gas umgewandelt wird;
c) das entstehende Gas gereinigt und dann an die Umgebung abgegeben wird;
d) der von Bindemittel befreite Splitt der Wiederverwertung in einem Asphaltmischwerk zugeführt wird,
**dadurch gekennzeichnet, dass**
e) das Straßenaufbruchmaterial im Schritt b) unter Zufuhr von Oxidationsluft bei einer Temperatur verbrannt wird, die 600° C nicht übersteigt.

2. Verfahren nach Anspruch 1, **dadurch gekennzeichnet,**
**dass** die im Schritt e) aus der Verbrennung des Bindemittels entstehenden Rauchgase unter erneuter Zufuhr von Oxidationsluft nachverbrannt werden.

3. Verfahren nach Anspruch 1 oder 2, **dadurch gekennzeichnet, dass** die bei der ersten Verbrennung und/oder bei der Nachverbrennung verwendete Oxidationsluft durch die bei der Verbrennung des Bindemittels entstehenden Rauchgase indirekt vorerwärmt wird.

4. Verfahren nach Anspruch 3, **dadurch gekennzeichnet,**
**dass** die bei der Nachverbrennung verwendete Oxidationsluft auf maximal 300° C vorerwärmt wird.

5. Verfahren nach einem der vorhergehenden Ansprüche,
**dadurch gekennzeichnet, dass** bei der Reinigung der Rauchgase eine Entstaubung stattfindet.

6. Verfahren nach einem der vorhergehenden Ansprüche,
**dadurch gekennzeichnet, dass** bei der Reinigung der Rauchgase ein Sorptionsverfahren eingesetzt wird.

7. Verfahren nach Anspruch 6, **dadurch gekennzeichnet, dass** als Sorbens Weißkalkhydrat eingesetzt wird.

8. Verfahren nach Anspruch 6, **dadurch gekennzeichnet,**
**dass** als Sorbens Natriumhydrogenkarbonat eingesetzt wird.

9. Verfahren nach einem der vorhergehenden Ansprüche,
**dadurch gekennzeichnet, dass** ein Teil der bei der Verbrennung des Bindemittels entstehenden Wärmeenergie zur Erzeugung von elektrischer Energie verwendet wird.

10. Verfahren nach Anspruch 9, **dadurch gekennzeichnet,**
**dass** die Erzeugung der elektrischen Energie in einem ORC-Prozess stattfindet.

11. Verfahren nach einem der vorhergehenden Ansprüche,
**dadurch gekennzeichnet, dass** der von Bindemittel gereinigte Splitt in noch erwärmtem Zustand direkt an das Asphaltmischwerk übergeben wird.

## Claims

1. Method of processing road construction waste material consisting essentially of chippings and pitch-containing organic binder, in which
a) the road construction waste material is comminuted;
b) the comminuted road construction waste material is heated up to a reaction temperature at which the binder is converted to a gas;
c) the resultant gas is cleaned and then released to the environment;
d) the chippings that have been freed of binder are sent to reutilization in an asphalt mixing plant,
**characterized in that**
e) the road construction waste material is combusted in step b) with supply of oxidation air at a temperature that does not exceed 600°C.

2. Method according to Claim 1, **characterized in that** the flue gases that result from the combustion of the binder in step c) are recombusted with renewed supply of oxidation air.

3. Method according to Claim 1 or 2, **characterized in that** the oxidation air used in the first combustion and/or in the recombustion is indirectly preheated by the flue gases formed in the combustion of the binder.

4. Method according to Claim 3, **characterized in that** the oxidation air used in the recombustion is preheated to a maximum of 300°C.

5. Method according to any of the preceding claims, **characterized in that** dedusting takes place in the cleaning of the flue gases.

6. Method according to any of the preceding claims, **characterized in that** a sorption method is used in the cleaning of the flue gases.

7. Method according to Claim 6, **characterized in that** the sorbent used is white lime hydrate.

8. Method according to Claim 6, **characterized in that** the sorbent used is sodium hydrogencarbonate.

9. Method according to any of the preceding claims, **characterized in that** some of the thermal energy that arises in the combustion of the binder is used to generate electrical energy.

10. Method according to Claim 9, **characterized in that** the generation of electrical energy takes place in an ORC process.

11. Method according to any of the preceding claims, **characterized in that** the chippings that have been freed of binder are transferred directly to the asphalt mixing plant in the still-heated state.

## Revendications

1. Procédé de traitement de matériau de démolition de routes qui est constitué pour l'essentiel de gravillons et de liant organique contenant de la poix, selon lequel
a) le matériau de démolition de routes est broyé ;
b) le matériau de démolition de routes broyé est chauffé jusqu'à une température de réaction à laquelle le liant est transformé en un gaz ;
c) le gaz obtenu est épuré puis évacué dans l'environnement ;
d) les gravillons débarrassés de la poix sont recyclés dans une centrale d'enrobage,
**caractérisé en ce que**
e) le matériau de démolition de routes est, à l'étape b), brûlé avec apport d'air d'oxydation à une température qui ne dépasse pas 600° C.

2. Procédé selon la revendication 1, **caractérisé en ce que** les gaz de fumée produits à l'étape e) par la combustion du liant sont soumis à une postcombustion avec un nouvel apport d'air d'oxydation.

3. Procédé selon la revendication 1 ou 2, **caractérisé en ce que** l'air d'oxydation utilisé pour la première combustion et/ou pour la postcombustion est indirectement préchauffé par les gaz de fumée produits lors de la combustion du liant.

4. Procédé selon la revendication 3, **caractérisé en ce que** l'air d'oxydation utilisé pour la postcombustion est préchauffé à 300° C au maximum.

5. Procédé selon l'une des revendications précédentes, **caractérisé en ce qu'**un dépoussiérage a lieu lors de l'épuration des gaz de fumée.

6. Procédé selon l'une des revendications précédentes, **caractérisé en ce qu'**on utilise un procédé de sorption pour l'épuration des gaz de fumée.

7. Procédé selon la revendication 6, **caractérisé en ce qu'**on utilise de l'hydroxyde de calcium comme agent de sorption.

8. Procédé selon la revendication 6, **caractérisé en ce qu'**on utilise de l'hydrogénocarbonate de sodium comme agent de sorption.

9. Procédé selon l'une des revendications précédentes, **caractérisé en ce qu'**une partie de l'énergie thermique produite lors de la combustion du liant est utilisée pour produire de l'énergie électrique.

10. Procédé selon la revendication 9, **caractérisé en ce que** la production de l'énergie électrique s'effectue selon un processus ORC (cycle de Rankine à fluide organique).

11. Procédé selon l'une des revendications précédentes, **caractérisé en ce que** les gravillons épurés du liant sont directement transmis à la centrale d'enrobage, dans un état encore chaud.
